Europäisches Patentamt

European Patent Office

Office européen des brevets

(11) Numéro de publication: **0 281 847 B1**

# FASCICULE DE BREVET EUROPEEN

(45) Date de publication de fascicule du brevet:
07.08.91

(51) Int. Cl.⁵: **A61C 1/08**

(21) Numéro de dépôt: 88102713.0

(22) Date de dépôt: 24.02.88

(54) **Pièce à main dentaire.**

(30) Priorité: 06.03.87 CH 859/87
        27.01.88 FR 8800939

(43) Date de publication de la demande:
14.09.88 Bulletin 88/37

(45) Mention de la délivrance du brevet:
07.08.91 Bulletin 91/32

(84) Etats contractants désignés:
AT CH DE FR LI SE

(56) Documents cités:
EP-A- 0 228 609        FR-A- 1 440 594
FR-A- 2 212 895        FR-A- 2 286 984
FR-A- 2 572 646        GB-A- 2 015 879

(73) Titulaire: MICRO-MEGA (SUISSE) S.A.
11-13, rue des Mouettes
CH-1227 Acacias/Genève(CH)

(72) Inventeur: Luiset, Jean-Jacques
c/o WICHT 4, rue de l'Est
CH-1207 Geneve(CH)

(74) Mandataire: Jörchel, Dietrich R.A. et al
c/o BUGNION S.A. 10, route de Florissant
Case postale 375
CH-1211 Genève 12 Champel(CH)

## Description

L'invention a pour objet une pièce à main dentaire selon la préambule de la revendication 1.

Une pièce à main de ce type est connue, par exemple du brevet français de la demanderesse FR 2 572 646, selon lequel le dispositif de réduction de vitesse se présente sous la forme d'un module interchangeable qui peut être facilement monté à l'intérieur de la pièce à main, et remplacé, selon les besoins, par un autre module de même conception offrant un rapport de réduction différent ou aussi un rapport de multiplication.

L'évolution de l'art dentaire a fait naître de nouveaux besoins en particulier dans le domaine des instruments rotatifs et par conséquent dans celui des dispositifs supportant et entraînant ces instruments rotatifs. C'est le cas de l'implantologie dont l'évolution a créé le besoin de pièces à main capables d'entraîner à faible vitesse et avec un couple important certains instruments pour les opérations de forage, de taraudage, etc.

Actuellement, les moteurs d'entraînement existants sur le marché offrent des vitesses de rotation variant de 4000 à 40.000 t/min alors que certains travaux, notamment l'implantologie, nécessitent des vitesses de l'outil de l'ordre de 600 à 100 t/min seulement, voire même de 10 t/min. Il est donc nécessaire d'assurer une réduction de vitesse importante. Une première solution consisterait à développer des ensembles moteurs ou moto-réducteurs à faible vitesse, mais celà conduirait le praticien à disposer en plus des familles de pièces à main, d'une famille de moteurs, ce qui serait pour lui inacceptable pour des raisons évidentes de manipulation et de coût. Une autre solution est d'utiliser des réducteurs différentiels.

On connait, par exemple dans le domaine des pièces à main, selon le brevet FR - 2.383.361, un réducteur différentiel à engrenages planétaires, dans lequel l'arbre d'entrée porte un pignon denté en prise avec trois pignons satellites, eux-mêmes en prise avec une couronne dentée fixe entourant l'ensemble, le porte-pignons satellites étant solidaire de l'arbre de sortie. Ce dispositif est cependant relativement compliqué du fait du nombre de pièces qui doivent tourner et il permet d'obtenir des rapports de réduction seulement de l'ordre de 10:1. En montant plusieurs engrenages planétaires de ce type l'un derrière l'autre, il est possible d'obtenir de plus grands rapports de réduction. Cependant la valeur du rapport de réduction est fonction du nombre d'engrenages planétaires utilisé, il n'est donc pas possible d'obtenir de très grands rapports de réduction dans un volume réduit.

Selon un autre brevet FR - 2.572.645, toujours dans le domaine des pièces à main, on utilise, afin de réduire l'encombrement, un module réducteur comportant un arbre intermédiaire oblique par rapport aux arbres d'entrée et de sortie et muni à chaque extrémité de pignons engrenant respectivement avec le pignon d'entrée et le pignon de sortie. Cependant, le rapport de réduction obtenu par ce dispositif est limité au rapport des dents des différents pignons coopérants et il ne peut donc pas être très élevé.

Dans le domaine de la mécanique générale, on connaît des réducteurs différentiels à grand rapport de réduction, comme décrit par exemple dans le brevet français 1 440 594. Ce réducteur comprend une roue intermédiaire oscillante montée à rotation libre sur une portion inclinée de l'arbre d'entrée et pourvue de dentures sur chacune de ses faces latérales, l'une coopérant avec une denture fixe, l'autre avec la denture d'une roue de sortie, au moins deux des dentures coopérantes présentant des nombres de dents différents. Ce réducteur est prévu, de préférence, pour être appliqué à l'entraînement d'un store ou d'un volet roulant, et son encombrement ne permet pas une utilisation en dentisterie, une simple réduction homothétique des dimensions étant incompatible avec la résistance des dents de pignons dont le module est très faible.

Des réducteurs du même type sont aussi connus des documents FR-A-2 286 984, FR-A 2 212 895, EP-A-78 111 et US-A-2 699 690, le dernier datant déjà de l'année 1955.

Cependant, aucun de ces réducteurs différentiels connus n'est disposé pour absorber des efforts axiaux importants, comme ils ont lieu lors de l'utilisation d'une pièce à main dentaire par le dentiste, et l'homme du métier n'a jamais pris en considération un tel réducteur comme propre à une pièce à main dentaire, quoique le principe de celui-ci est déjà connu depuis plus de trente ans.

La présente invention a pour but de réaliser une pièce à main dentaire munie d'un réducteur différentiel permettant une grande réduction de vitesse d'un rapport déterminé, pouvant aller jusqu'à environ 2000:1, ce réducteur devant en outre être conçu pour pouvoir être réalisé avec différents rapports de réduction, offrir un encombrement réduit et être d'une construction simple.

A cet effet, la pièce à main dentaire selon l'invention est caractérisée par la clause caractérisante de la revendication 1.

Grâce à la butée à billes mentionnée, sont absorbés les efforts axiaux et radiaux très importants induits par le mouvement de basculement et de rotation de la roue intermédiaire et transmis directement à l'arbre de sortie.

L'unité modulaire de cette nouvelle pièce à main présente de nombreux autres avantages. Son assemblage permet un montage et démontage aisés, soit pour une intervention de maintenance, soit pour une modification du rapport de réduction par échange des modules réducteurs. On arrive à de très grandes démultiplications dans un volume restreint et le nombre de pièces en mouvement est réduit par rapport aux réducteurs classiques, ce qui réduit le jeu angulaire. La vitesse de la roue intermédiaire est faible, elle sera même nulle si les nombres des dents de la roue fixe et celui de la face coopérante de la roue intermédiaire sont égaux. Il y a une limitation du ccuple par la liaison des réactions mécaniques entre l'arbre d'entrée et l'arbre de sortie; avec les systèmes réducteurs classiques à très grandes démultiplications, ce couple étant souvent trop important et gênant.

Le réducteur selon l'invention est bien applicable aux instruments dentaires nécessitant une vitesse très lente, comme par exemple les perceuses, les taradeuses-visseuses, les fraiseuses à basse vitesse, comme celà est notamment nécessaire dans le domaine de l'implantologie.

De préférence, la cage est fermée du côté entrée par un flasque pourvu de la roue fixe dentée et du palier de l'arbre d'entrée et la roue de sortie est formée d'une pièce avec l'arbre de sortie.

La partie cylindrique inclinée est de préférence prolongée par un tourillon aligné avec l'arbre d'entrée et la partie arrière de l'arbre de sortie, située à l'intérieur de la cage, est creuse et comporte un roulement recevant ledit tourillon.

Par ailleurs, la partie cylindrique inclinée est de préférence logée dans un roulement à aiguilles monté entre deux épaulements situés de part et d'autre de ladite partie cylindrique inclinée et la périphérie intérieure de la roue intermédiaire.

Des autres caractéristiques résultent des revendications dépendantes.

Une forme d'éxécution préférée de la pièce à main va maintenant être décrite ci-après à l'aide de la description qui suit et du dessin annexé dans lequel :

La figure 1 est une vue générale éclatée de la pièce à main dentaire selon l'invention.

La figure 2 représente une vue schématique, en coupe longitudinale, du réducteur de vitesse.

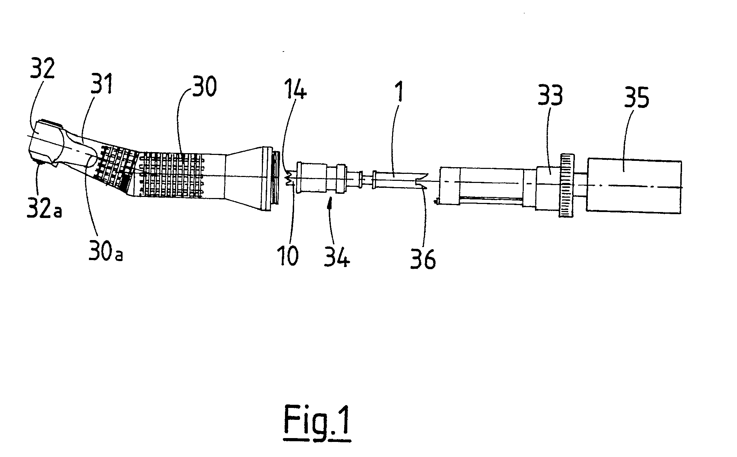

Sur la figure 1, la pièce à main, dans la forme d'un contre-angle, est composée, de manière connue, d'un manche 30, d'une partie antérieure 31 comportant un arbre de transmission 30a, illustré schématiquement par un trait mixte, et de la tête 32 munie de moyens, non représentés, pour la fixation de l'outil 32a, d'une partie intérieure 33 qui s'ajuste dans le manche 30 et qui est prévue pour être raccordée à une pièce motrice 35. Pour transmettre le mouvement de la pièce motrice 35 à l'arbre de transmission 30a, il est prévu un réducteur de vitesse 34, sous la forme d'une unité modulaire interchangeable, comprenant un arbre d'entrée 1 dont l'extrémité est pourvue d'un entraîneur 36 compatible avec l'entraîneur de la pièce motrice 35, et un arbre de sortie 10 munie d'une denture frontale 14 engrènant avec une denture de l'arbre de transmission 30a.

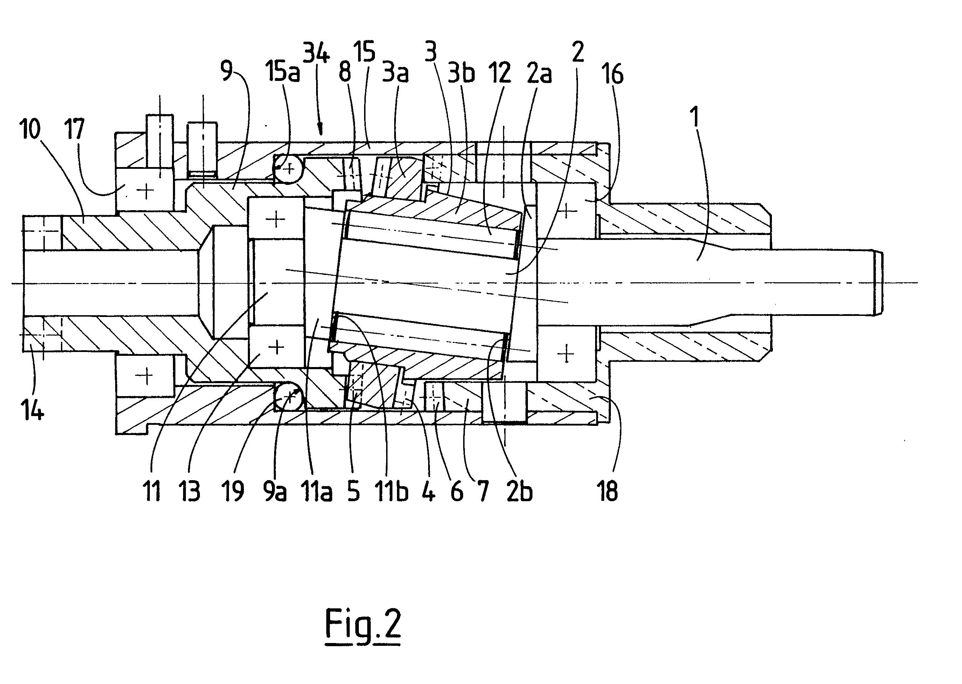

Selon la figure 2, on voit que l'arbre d'entrée 1 et l'arbre de sortie 10 du réducteur 34 sont montés dans une cage 15, et sont supportés par des roulements à billes 16, respectivement 17 logés dans la cage 15. Cette cage 15 est fermée du côté entrée par un flasque 18 formé d'une pièce avec une roue fixe 7 munie d'une denture frontale 6 dirigée vers l'intérieur de la cage 15 et disposée concentriquement à l'arbre d'entrée 1. Le roulement à billes 16 supportant l'arbre d'entrée 1 est monté à l'intérieur du flasque 18. L'arbre de sortie 10 est creux et formé d'une pièce, à son extrémité postérieure, avec une roue de sortie 9 qui lui est concentrique et qui a une denture frontale 8 dirigée, elle aussi, vers l'intérieur de la cage 15. Sur la périphérie extérieure de la roue de sortie 9 est formé un épaulement 9a dirigé du côté de la sortie et disposé en vis-à-vis d'un épaulement 15a prévu à la périphérie intérieure de la cage 15. L'espace annulaire entre les épaulements étant occupé par des billes 19 formant avec ces épaulements 9a, 15a, une butée à billes.

L'arbre d'entrée 1 est prolongé par une partie cylindrique 2, inclinée par rapport à lui, et séparée de lui par l'intermédiaire d'un collet 2a formant épaulement 2b. La face de cet épaulement 2b dirigée vers l'intérieur de la cage présentant par rapport à un plan perpendiculaire à l'arbre d'entrée, la même inclinaison que la partie cylindrique 2 par rapport à cet arbre d'entrée 1. Cet angle d'inclinaison est très faible, de l'ordre de 5° à 15°.

La partie cylindrique inclinée 2 est prolongée par un tourillon 11 aligné avec l'arbre d'entrée 1, un collet 11a séparant les deux parties et formant épaulement 11b. La face de cet épaulement 11b dirigée vers l'intérieur de la cage 15 présentant par rapport à un plan perpendiculaire à l'arbre d'entrée le même angle d'inclinaison que l'épaulement 2b. La partie arrière de l'arbre de sortie 10 est creuse est reçoit un palier 13, formé par des roulements à billes, dans lequel se loge le tourillon 11 en vue d'assurer le centrage de l'arbre d'entrée 1.

Sur la partie cylindrique inclinée 2 de l'arbre d'entrée 1 est montée librement en rotation une roue intermédiaire 3 munie sur les deux faces de zones annulaires d'engrenage formées par des dentures frontales 4, 5. Un roulement à aiguilles 12 logé entre la partie cylindrique inclinée 2 et la périphérie interne de la roue intermédiaire 3 et tenu entre les deux épaulements 2b et 11b, assure une bonne rotation de la roue intermédiaire 3 sur la partie inclinée 2. Sur la face de la roue intermédiaire 3 dirigée vers l'arbre d'entrée 1, la denture frontale 4 a un nombre de dents $Z_2$ et, sur l'autre face, la denture frontale 5 a un nombre de dents $Z_3$. La roue intermédiaire 3 coopère par sa denture frontale 4 avec la denture 6, ayant un nombre de dents $Z_1$, de la roue fixe 7 disposée concentriquement à l'arbre d'entrée 1, tandis que la denture frontale 5 de son autre face coopère avec la denture frontale 8, ayant un nombre de dents $Z_4$, de la roue de sortie 9.

Selon une forme préférée de l'invention, la roue intermédiaire 3 est formée de deux parties, une partie 3a supportant les deux dentures frontales 4, 5 qui est rapportée sur une partie 3b montée sur le roulement à aiguilles 12. La partie 3a supportant les dentures frontales est réalisée en fonction du rapport de réduction recherché et est donc différente d'un réducteur à l'autre.

Pour réaliser les mouvements des roues, on constate d'abord que la denture 4 de la roue intermédiaire 3 n'engage la denture 6 de la roue fixe 7 que sur une zone limitée à quelques dents tandis que l'autre denture 5 de la roue intermédiaire 3 n'engage la denture 8 de la roue de sortie 9 que sur une zone, également limitée à quelques dents, diamètralement opposée.

Si l'arbre d'entrée 1 et donc la partie inclinée 2 font une rotation complète, cette dernière décrit dans l'espace deux cônes opposés par leur sommet, et entraîne dans ce mouvement la roue intermédiaire 3, qui est montée librement sur cette partie inclinée 2. Lors de ce mouvement, les zones de contact entre la roue intermédiaire 3 et la roue fixe 7 d'une part, ainsi que la roue de sortie 9 d'autre part, circulent le long des dentures correspondantes. Ce mouvement de la roue intermédiaire 3 est une sorte de mouvement de vacillement. L'angle d'inclinaison très faible de $5°$ à $15°$ de la partie inclinée 2 et par conséquent de la roue intermédiaire 3, permet d'assurer une conduite sur un minimum de trois dents au niveau de chaque engrenage.

On peut facilement déduire de ce qui précède que le rapport entre la vitesse de rotation n1 de l'arbre d'entrée 1 et la vitesse de rotation n2 de l'arbre de sortie 2 est donné par la formule :

$$n2/n1 = 1 - Z_1 Z_3 / Z_2 Z_4$$

De cette formule, il résulte clairement que la fraction ne doit pas être égale à 1, donc le rapport $Z_3/Z_4$ ne doit pas être l'inverse du rapport $Z_1/Z_2$, parce que dans ce cas, la roue de sortie 9 reste immobile. Par cette formule, on voit également le sens de rotation des roues, à savoir si le rapport $Z_1 Z_3/Z_2 Z_4$ est inférieur à 1, la roue de sortie 9 tourne dans le même sens que l'arbre d'entrée 1; si ce rapport est supérieur à 1, son sens de rotation est inverse à celui de l'arbre d'entrée 1.

Il résulte également de cette formule que pour arriver à une très grande démultiplication, il faut choisir le rapport $Z_1/Z_2$ très légèrement inférieur à 1 et le rapport $Z_3/Z_4$ très légèrement supérieur à 1 (ou vice versa), mais un petit peu différent.

Pour utiliser d'une manière optimale la conception de l'invention en vue d'arriver à une très grande démultiplication, on choisit de préférence les nombres de dents de la manière suivante:

$$Z_2 = Z_4 = N, Z_1 = N-1, Z_3 = N+1$$

Cela donne d'après la formule $n2/n1 = 1/N^2$, le sens de rotation de l'arbre de sortie 10 est le même que celui de l'arbre d'entrée 1. En choisissant, par exemple, comme nombre N = 30, on arrive à un rapport de vitesses n2/n1 = 1/900. En choisissant le nombre N = 40, le rapport de réduction est de 1/1600.

En choisissant les rapports des dents d'une manière adéquate, avec un engrènement des dents suffisant, on peut arriver à des rapports de réduction choisis dans une très grande marge. Par exemple, si $Z_4 = 31$, $Z_3 = 32$, $Z_2 = 20$, et $Z_1 = 19$, on arrive à un rapport de réduction de 1:51 2/3.

Une conception à simple effet peut être obtenue si $Z_3 = Z_4$, le rapport final sera de $1 - Z_1/Z_2$, ou si
$Z_1 = Z_2$ le rapport sera $1 - Z_3/Z_4$.

L'avantage de ce dispositif est qu'il n'y a qu'une rotation lente de la roue intermédiaire 3 et que le nombre de pièces en mouvement est très réduit par rapport aux nombres de pièces composant les réducteurs connus jusqu'ici. De plus, du fait que la partie inclinée 2 a un très faible angle d'inclinaison par rapport à l'arbre d'entrée 1, on peut considérer que la roue intermédiaire 3 occupe un espace restreint, presque aligné à l'espace occupé par les roues fixe et mobile, les trois roues peuvent être insérées sans difficulté dans un volume cylindrique. Grâce à la liaison des réactions mécaniques entre l'arbre d'entrée et l'arbre de sortie, il y a une limitation importante du couple.

Du fait de son faible encombrement et de sa présentation sous forme de module compact, le réducteur qui vient d'être décrit peut avantageusement être utilisé dans les instruments dentaires nécessitant une grande démultiplication, le module cylindrique pouvant aisément être inséré dans la douille de préhension d'une pièce à main droite, ou dans un contre-angle ou aussi dans le moteur. On peut notamment utiliser un tel réducteur, par exemple, dans une perceuse, dans une taraudeuse-visseuse, dans une fraiseuse à basse vitesse. Bien entendu, d'autres applications pourraient être envisagées sans sortir du cadre de l'invention.

**Revendications**

1. Pièce à main dentaire, notamment contre-angle, comprenant un manche (30) dans lequel est logé un réducteur de vistesse sous la forme d'une unité modulaire (34) interchangeable comportant un arbre d'entrée (1) et un arbre de sortie (10) alignés, et une partie antérieure (31) raccordée au manche (30) et comportant un arbre de transmission (30a) et des moyens ((32) pour la fixation de l'outil, l'extrémité postérieure de l'arbre d'entrée (1) étant destinée à être accouplée à une pièce motrice (35), l'unité modulaire (34) comportant une cage (15) dans laquelle sont logés des paliers (16, 17, de préférence des roulements à billes, pour les arbres d'entrée (1) et de sortie (10), et dont le côté d'entrée est muni d'une roue fixe (7) disposée concentriquement à l'arbre d'entrée (1) et pourvue d'une denture frontale (6) dirigée vers l'intérieur de la cage, caractérisée par le fait que l'arbre de sortie (10) comporte, à son extrémité postérieure, une roue de sortie (9) ayant une denture frontale (8) dirigée vers l'intérieur de la cage, et sur sa périphérie extérieure un épaulement (9a) dirigé vers la sortie et disposé en vis-à-vis d'un épaulement (15a) prévu à la périphérie de la cage, l'espace annulaire entre les épaulements étant occupé par des billes (19) formant avec ces épaulements (9a, 15a) une butée à billes, que l'arbre d'entrée (1) est prolongé par une partie cylindrique (2) inclinée par rapport à cet arbre d'entrée (1) et sur lequel est montée librement en rotation une roue intermédiaire (3) munie sur chacune de ses faces de dentures frontales (4, 5), l'une coopérant avec la denture (6) de la roue fixe (7) l'autre avec la denture (8) de la roue de sortie (9), le rapport entre les nombres de dents d'au moins deux dentures coopérantes étant inégal à un et différent du rapport entre les nombres de dents des deux autres dentures.

2. Pièce à main selon la revendication 1, caractérisée par le fait que la cage (15) est fermée du côté entrée par un flasque (18) pourvu de la roue fixe (7) et de sa denture (6), et du palier (16) de l'arbre d'entrée (1), et que la roue de sortie (9) est formée d'une pièce avec l'arbre de sortie (10).

3. Pièce à main selon l'une des revendications 1 ou 2, caractérisée par le fait que la partie cylindrique inclinée (2) est prolongée par un tourillon (11) aligné avec ledit arbre d'entrée (1) et que la partie arrière de l'arbre de sortie (10), située à l'intérieur de la cage (15), est creuse et comporte un palier (13), de préférence un roulement à billes, recevant ledit tourillon (11).

4. Pièce à main selon l'une des revendications 1 à 3, caractérisée par le fait que la partie cylindrique inclinée (2) est logée dans un roulement à aiguilles (12) monté entre deux épaulements (2b, 11b) situés de part et d'autre de ladite partie cylindrique inclinée, et la périphérie interne de la roue intermédiaire (3).

5. Pièce à main selon l'une des revendications 3 ou 4, caractérisée par le fait que la partie cylindrique inclinée (2) et le tourillon (11) forment une seule pièce avec l'arbre d'entrée (1), et que ladite partie cylindrique inclinée est située entre deux collets (2a, 11a) qui la relient d'un côté à l'arbre d'entrée (1), de l'autre côté au tourillon (11), et dont les faces dirigées vers elle présentent le même angle d'inclinaison et constituent lesdits épaulements.

6. Pièce à main selon l'une des revendications 1 à 5, caractérisée par le fait que la roue intermédiaire (3) est constituée d'une partie (3a) supportant les deux dentures frontales (4, 5), qui est rapportée sur une partie (3b) montée sur ledit roulement à aiguilles (12) et peut être remplacée en fonction du rapport de réduction désiré.

7. Pièce à main selon l'une des revendications 1 à 6, caractérisée par le fait que l'angle d'inclinaison de la roue intermédiaire (3) est compris entre 5° et 15°, de façon à assurer qu'en permanence au moins trois dents assurent la conduite au niveau de chaque engrenage.

8. Pièce à main selon l'une des revendications 1 à 7, caractérisée par le fait que l'arbre d'entrée (1) est pourvu d'un entraîneur (36) compatible avec les entraîneurs usuels de moteur (35).

9. Pièce à main selon l'une des revendications 1 à 8, caractérisée par le fait que l'arbre de sortie (10) est pourvu d'une denture frontale (14) engrènant avec les moyens de transmission du mouvement vers la tête (32) de la pièce à main.

**Claims**

1. A dental handpiece, in particular a contra-angle, comprising a sleeve (30) in which there is located a speed reducer in the form of an interchangeable modular unit (34) comprising an input shaft (1) and an output shaft (10) which are aligned, and a front part (31) connected to the sleeve (30) and comprising a transmission shaft (30a) and means (32a) for fastening the tool, the rear end of the input shaft (1) being intended to be coupled to a driving piece (35), the modular unit (34) comprising a housing (15) in which there are located bearings (16, 17), preferably ball bearings, for the input shaft (1) and output shaft (10), and of which the input side is provided with a fixed wheel (7) arranged concentrically with respect to the input shaft (1) and provided with a radial toothing (6) facing the interior of the housing, characterized in that the output shaft (10) comprises at its rear end an output wheel (9) having a radial toothing (8) facing the inside of the housing and, on its external periphery, a shoulder (9a) facing the output and arranged opposite a shoulder (15a) provided on the periphery of the housing, the annular space between the shoulders being occupied by balls (19) forming with these shoulders (9a, 15a) a ball thrust bearing, and in that the input shaft (1) is extended by a cylindrical part (2) inclined with respect to this input shaft (1) and on which there is mounted in free rotation an intermediate wheel (3) provided on each of its faces with radial toothings (4, 5), one of which cooperates with the toothing (6) of the fixed wheel (7) and the other with the toothing (8) of the output wheel (9), the ratio between the number of teeth of at least two cooperating toothings being not equal to one and different from the ratio between the number of teeth of the two other toothings.

2.  A handpiece as claimed in claim 1, characterized in that the housing (15) is closed on the input side by a side plate (18) provided with the fixed wheel (7) and its toothing (6) and the bearing (16) of the input shaft (1), and in that the output wheel (9) is in one piece with the output shaft (10).

3.  A handpiece as claimed in one of claims 1 or 2, characterized in that the inclined cylindrical part (2) is extended by a pivot (11) aligned with the said input shaft (1) and in that the rear part of the output shaft (10), situated inside the housing (15), is hollow and comprises a bearing (13), preferably a ball bearing, receiving the said pivot (11).

4.  A handpiece as claimed in one of claims 1 to 3, characterized in that the inclined cylindrical part (2) is housed in a needle bearing (12) mounted between two shoulders (2b, 11b) situated on either side of the said inclined cylindrical part, and the internal periphery of the intermediate wheel (3).

5.  A handpiece as claimed in one of claims 3 or 4, characterized in that the inclined cylindrical part (2) and the pivot (11) form a single piece with the input shaft (1), and in that the said inclined cylindrical part is situated between two collars (2a, 11a) which connect it on one side to the input shaft (1) and on the other side to the pivot (11), and whose faces facing the inclined cylindrical part have the same angle of inclination and make up the said shoulders.

6.  A handpiece as claimed in one of claims 1 to 5, characterized in that the intermediate wheel (3) is made up of a part (3a) supporting the two radial toothings (4, 5), and connected to a part (3b) mounted on the said needle bearing (12) and which can be replaced as a function of the reducing ratio sought.

7.  A handpiece as claimed in one of claims 1 to 6, characterized in that the angle of inclination of the intermediate wheel (3) is between 5° and 15°, such that it is ensured that at least three teeth always assure movement at each engagement.

8.  A handpiece as claimed in one of claims 1 to 7, characterized in that the input shaft (1) is provided with a driving member (36) compatible with the conventional driving members of the motor (35).

9.  A handpiece as claimed in one of claims 1 to 8, characterized in that the output shaft (10) is provided with a radial toothing (14) engaging with the means of transmission of movement towards the head (32) of the handpiece.

## Patentansprüche

1.  Zahnärztliches Handstück, insbesondere Winkelstück, mit einem Griffstück (30), in welches ein in Form einer austauschbaren modularen Einheit (34) ausgebildeter Geschwindigkeitsuntersetzer eingesetzt ist, der eine Eingangswelle (1) und eine mit dieser ausgerichtete Ausgangswelle (10) aufweist, und mit einem mit dem Griffstück (30) verbundenen vorderen Teil (31), der eine Uebertragungswelle (30a) und Mittel (32a) zum Befestigen des Instruments aufweist, wobei das hintere Ende der Eingangswelle (1) dazu bestimmt ist, an ein Antriebsteil (35) angekuppelt zu werden, und die modulare Einheit (34) ein Gehäuse (15) hat, in welchem Lager (16, 17), vorzugsweise Kugellager, für die Eingangswelle (1) und die Ausgangswelle (10) untergebracht sind und dessen Eingangsseite ein festes Rad (7) aufweist, das konzentrisch zur Eingangswelle (1) liegt und mit einer ins Innere des Gehäuses gerichteten Seitenzahnung (6) versehen ist, dadurch gekennzeichnet, dass die Ausgangswelle (10) an ihrem hinteren Ende ein Ausgangsrad (9) mit einer ins Innere des Gehäuses gerichteten Seitenzahnung (8) und auf ihrem äusseren Umfang eine zum Ausgang hin gerichtete Schulter (9a) aufweist, die einer am Umfang des Gehäuses vorgesehenen Schulter (15a) gegenüberliegt, dass in dem zwischen diesen Schultern liegenden Ringraum Kugeln (19) angeordnet sind, die mit diesen Schultern (9a, 15a) ein Axialkugellager bilden, dass die Eingangswelle (1) durch einen zylindrischen Teil (2) verlängert ist, der in Bezug auf die Eingangswelle (1) geneigt ist und auf welchem frei drehbar ein Zwischenrad (3) sitzt, das an seinen beiden Seiten mit Seitenzahnungen (4, 5) versehen ist, von denen die eine mit der Zahnung (6) des festen Rades (7) und die andere mit der Zahnung (8) des Ausgangsrades (9) zusammenwirkt, und dass das Verhältnis zwischen den Zähnezahlen wenigstens zweier zusammenwirkender Zahnungen ungleich eins und verschieden vom Verhältnis zwischen den Zähnezahlen der beiden anderen Zahnungen ist.

2. Handstück nach Anspruch 1, dadurch gekennzeichnet, dass das Gehäuse (15) an seiner Eingangsseite durch einen Flansch (18) verschlossen ist, der mit dem festen Rad (7) und seiner Zahnung (6) sowie mit dem Lager (16) der Eingangswelle (1) versehen ist, und dass das Ausgangsrad (9) einteilig mit der Ausgangswelle (10) ausgebildet ist.

3. Handstück nach einem der Ansprüche 1 oder 2, dadurch gekennzeichnet, dass der zylindrische geneigte Teil (2) durch einen Zapfen (11) verlängert ist, welcher mit der erwähnten Eingangswelle (1) ausgerichtet ist, und dass der hintere, im Innern des Gehäuses (15) liegende Teil der Ausgangswelle (10) hohl ist und ein Lager (13), vorzugsweise ein Kugellager, zur Aufnahme dieses Zapfens (11) aufweist.

4. Handstück nach einem der Ansprüche 1 bis 3, dadurch gekennzeichnet, dass der zylindrische geneigte Teil (2) in einem Nadellager (12) angeordnet ist, welches zwischen zwei Schultern (2b), 11b), die beiderseits des erwähnten zylindrischen geneigten Teils liegen, und dem Innenumfang des Zwischenrades (3) montiert ist.

5. Handstück nach einem der Ansprüche 3 oder 4, dadurch gekennzeichnet, dass der zylindrische geneigte Teil (2) und der Zapfen (11) ein einziges Stück mit der Eingangswelle (1) bilden und dass der erwähnte zylindrische geneigte Teil zwischen zwei Ansätzen (2a, 11a) liegt, die ihn auf der einen Seite mit der Eingangswelle (1) und auf der anderen Seite mit dem Zapfen (11) verbinden und deren Flächen, die diesem zylindrischen geneigten Teil zugewandt sind, denselben Neigungswinkel haben und die erwähnten Schultern bilden.

6. Handstück nach einem der Ansprüche 1 bis 5, dadurch gekennzeichnet, dass das Zwischenrad (3) einen die beiden Seitenzahnungen (4, 5) tragenden Teil (3a) aufweist, welcher auf einem auf dem erwähnten Nadellager (12) montierten Teil (3b) aufgesetzt ist und als Funktion des gewünschten Untersetzungsverhältnisses ausgetauscht werden kann.

7. Handstück nach einem der Ansprüche 1 bis 6, dadurch gekennzeichnet, dass der Neigungswinkel des Zwischenrades (3) zwischen $5°$ und $15°$ beträgt, derart, dass in Höhe jeder Zahneingriffsstelle ständig wenigstens drei Zähne die Bewegungsübertragung gewährleisten.

8. Handstück nach einem der Ansprüche 1 bis 7, dadurch gekennzeichnet, dass die Eingangswelle (1) mit einem Mitnehmer (36) versehen ist, der mit den üblichen, am Antriebsteil (35) vorgesehenen Mitnehmern verträglich ist.

9. Handstück nach einem der Ansprüche 1 bis 8, dadurch gekennzeichnet, dass die Ausgangswelle (10) mit einer Seitenzahnung (14) versehen ist, die mit den Mitteln zur Bewegungsübertragung auf den Kopf (32) des Handstücks in Eingriff stehen.

<u>Fig.1</u>

Fig.2